# EUROPÄISCHE PATENTSCHRIFT

(11) **EP 0 726 511 B1**
(45) Veröffentlichungstag und Bekanntmachung des Hinweises auf die Patenterteilung: **01.08.2001**
(21) Anmeldenummer: 95119118.8
(22) Anmeldetag: 05.12.1995
(51) Int. Cl.: G05D 16/06

(54) **Druckregelventil**
Pressure regulating valve
Vanne de régulation de pression

(30) Priorität: 10.02.1995 DE 19504364
(43) Veröffentlichungstag der Anmeldung: 14.08.1996
(73) Patentinhaber: FESTO AG & Co, 73734 Esslingen (DE)
(72) Erfinder: Stoll, Kurt, Dr., D-73732 Esslingen (DE); Quendt, Volker, D-73734 Esslingen (DE)
(74) Vertreter: Abel, Martin, Dipl.-Ing.

(56) Entgegenhaltungen:
- GB-A- 1 063 241
- US-A- 2 985 490
- US-A- 4 979 537

## Beschreibung

Die Erfindung betrifft ein Druckregelventil, mit einem Primärdruck-Anschluß zur Druckmittelzufuhr, einem druckgeregelten Sekundärdruck-Anschluß zur Verbindung mit einem Verbraucher, und einem Entlüftungsanschluß, ferner mit einer Stelleinrichtung, die mittels eines in einer Steuerkammer herrschenden veränderlichen Steuerdruckes in verschiedenen Regelstellungen positionierbar ist, unter denen sich eine Neutralstellung, wenigstens eine Speisestellung und wenigstens eine Entlüftungsstellung befindet, wobei der Sekundärdruck-Anschluß in der Neutralstellung sowohl vom Primärdruck-Anschluß als auch vom Entlüftungsanschluß abgetrennt ist, während er in den möglichen Speise- und Entlüftungsstellungen jeweils entweder mit dem Primärdruck-Anschluß oder dem Entlüftungsanschluß verbunden und gleichzeitig vom jeweils anderen Anschluß abgetrennt ist, und wobei die Stelleinrichtung durch eine der Wirkungsrichtung des Steuerdruckes entgegenwirkende mechanische Federeinrichtung derart beaufschlagt ist, daß sie bei in der Steuerkammer herrschendem Umgebungsdruck selbsttätig eine Grundstellung einnimmt, die einer Entlüftungsstellung entspricht.

Ein Druckregelventil dieser Art geht aus der US 2,985,490 A und aus der GB 1 063 241 A hervor. Es regelt durch veränderliche Vorgabe der Regelstellung der Stelleinrichtung den im Vergleich zum Primärdruck geringeren Sekundärdruck auf einen am angeschlossenen Verbraucher gewünschten Druckwert. Um den Sekundärdruck zu erhöhen, wird die Stelleinrichtung in einer Speisestellung gehalten, eine Verringerung des Sekundärdrukkes wird durch ein Positionieren der Stelleinrichtung in einer Entlüftungsstellung bewirkt. Zur Vorgabe einer jeweiligen Regelstellung dient ein variabler Steuerdruck, der das Stellglied beaufschlagt und in einer Steuerkammer zur Verfügung gestellt wird. Bedingt durch die mechanische Federeinrichtung liegt bei völliger Entlüftung der Steuerkammer eine Entlüftungsstellung vor, in der der Sekundärdruck-Anschluß entlüftet ist.

Es ist die Aufgabe der vorliegenden Erfindung, ein Druckregelventil der eingangs genannten Art zu schaffen, das unter Beibehaltung der Möglichkeit zum vollständigen Entlüften des Sekundärdruck-Anschlusses eine gute Regelqualität besitzt.

Gelöst wird diese Aufgabe durch ein Ventilgehäuse, in dem sich zwei den Sekundär-Anschluß zum einen mit dem Primärdruck-Anschluß und zum andern mit dem Entlüftungsanschluß verbindende Überströmöffnungen befinden, die jeweils von einem gehäusefesten Ventilsitz umgeben sind, wobei die Stelleinrichtung zwei unabhängig voneinander bewegbare, jeweils einem der Ventilsitze zugeordnete und federnd in Richtung einer die zugeordnete Überströmöffnung verschließenden Schließstellung vorgespannte Verschlußglieder sowie ein zur Betätigung der Verschlußglieder dienendes, unter Vermittlung des Steuerdruckes linear bewegbares Stellglied aufweist.

Auf diese Weise ist weiterhin gewährleistet, daß bei völliger Entlüftung der Steuerkammer auch der Sekundärdruck-Anschluß automatisch drucklos wird. Die Stelleinrichtung enthält ein Stellglied, daß während der Regelbewegungen auf zwei relativ zu ihm bewegliche Verschlußglieder einwirken kann, wovon das eine einer Überströmöffnung zwischen dem Sekundärdruck-Anschluß und dem Primärdruck-Anschluß und das andere einer Überströmöffnung zwischen dem Sekundärdruck-Anschluß und dem Entlüftungsanschluß zugeordnet ist. Die Verschlußglieder werden durch von der mechanischen Federeinrichtung unabhängige Federanordnungen in Richtung einer die zugeordnete Überströmöffnung verschließenden Schließstellung vorgespannt, die sie in der Neutralstellung der Stelleinrichtung einnehmen. An dem Stellglied vorgesehene Betätigungspartien wirken beim Verstellen des Stellgliedes je nach Auslenkungseinrichtung im Öffnungssinne auf das eine oder andere Verschlußglied ein, während das andere unverändert in der Schließstellung verbleibt. Da die beiden Verschlußglieder voneinander entkoppelt sind, ergibt sich eine gute Regelqualität.

Vorteilhafte Weiterbildungen der Erfindung gehen aus den Unteransprüchen hervor.

Zweckmäßigerweise legt man die dem Steuerdruck entgegenwirkende Federeinrichtung derart aus, daß der dem Druckmittel in der Grundstellung zur Verfügung stehende Überströmquerschnitt zwischen dem Sekundärdruck-Anschluß und dem Entlüftungsanschluß geringer ist als der im Betrieb des Druckregelventils maximal einstellbare Überströmquerschnitt. Damit wird erreicht, daß die Druckdifferenz (Offset) zwischen dem Steuerdruck und dem Sekundärdruck möglichst gering ist, so daß die für den Betrieb des Druckregelventils zur Verfügung zu stellenden Druckwerte des Steuerdruckes gering gehalten werden können.

Die Verschlußglieder sind zweckmäßigerweise axial verschieblich auf dem Stellglied angeordnet, von dem sie durchsetzt werden können.

Bevorzugt ist das Stellglied über eine flexible, zweckmäßigerweise elastische Membran beweglich am Ventilgehäuse aufgehängt. Diese Membran bildet einen Wandabschnitt der Steuerkammer, so daß sie bei Beaufschlagung mit dem Steuerdruck die erforderliche Regelbewegung ermöglicht.

Auf der der Steuerkammer entgegengesetzten Seite der Membran befindet sich zweckmäßigerweise eine Gegendruckkammer, die ständig mit dem Sekundärdruck-Anschluß kommuniziert, wobei die für die Grundstellung zuständige Federeinrichtung zweckmäßigerweise in der Gegendruckkammer aufgenommen ist.

Damit das in den verschiedenen Anschlüssen anstehende Druckmittel keine Verfälschungen des Regelverhaltens hervorruft, sind die Verschlußglieder zweckmäßigerweise druckkraftausgeglichen. Um dies zu erreichen, können die dem zugeordneten Ventilsitz entgegengesetzten Stirnflächen der beiden Verschlußglieder betragsmäßig gleich groß und ständig vom Sekundärdruck beaufschlagt sein.

Nachfolgend wird die Erfindung anhand der beiliegenden Zeichnung näher erläutert. In dieser zeigen:

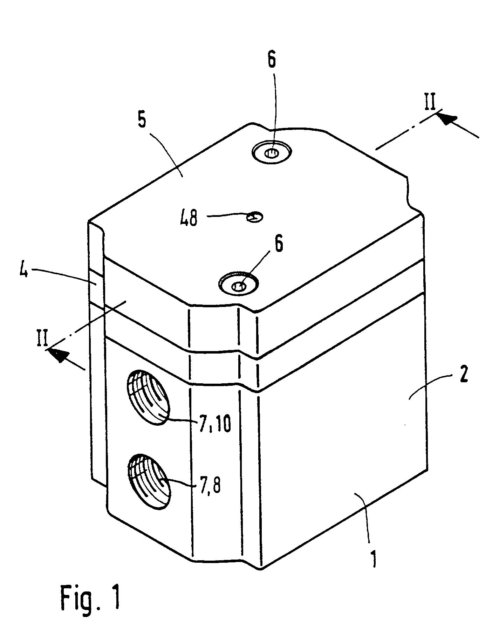

- Fig. 1: das erfindungsgemäße Druckregelventil in einer ersten Bauform in perspektivischer Ansicht und
- Fig. 2: das Druckregelventil aus Fig. 1 im Längsschnitt gemäß Schnittlinie II-II in der Grundstellung.

Das beispielsgemäße pneumatische Druckregelventil ist ein Mengenverstärker, der auch als "pneumatischer Booster" bezeichnet werden könnte. Er kann bei einer Druckverstärkung von beispielsweise 1 : 1 den Durchfluß eines kleinen Vorsteuerventils erheblich vergrößern. Er dient hauptsächlich proportionalen Anwendungen.

Das abgebildete Druckregelventil besitzt ein mehrteiliges Ventilgehäuse 1, bestehend aus einem Grundkörper 2, einer an einer axialen Stirnfläche 3 des Grundkörpers 2 angesetzten Zwischenplatte 4 und einer auf der Zwischenplatte 4 sitzenden Abschlußplatte 5. Letztere ist über Schrauben 6 mit dem Grundkörper 2 verschraubt, wobei die dazwischenliegende Zwischenplatte 4 ebenfalls gehalten wird.

An der seitlichen Außenfläche des Grundkörpers 2 befinden sich mehrere Öffnungen 7, die einem Primärdruck-Anschluß (P) 8, einem Sekundärdruck-Anschluß (A) 9 und einem Entlüftungsanschluß (R) 10 zugeordnet sind.

Die vorgenannten Anschlüsse 8, 9, 10 münden im Innern des Grundkörpers 2 in einen sich axial erstreckenden Aufnahmeraum 13 für Teile einer in dem Ventilgehäuse 1 untergebrachten und allgemein mit 14 bezeichneten Stelleinrichtung. Der Aufnahmeraum 13 ist im wesentlichen zylindrisch konturiert, allerdings in Längsrichtung mehrfach abgestuft.

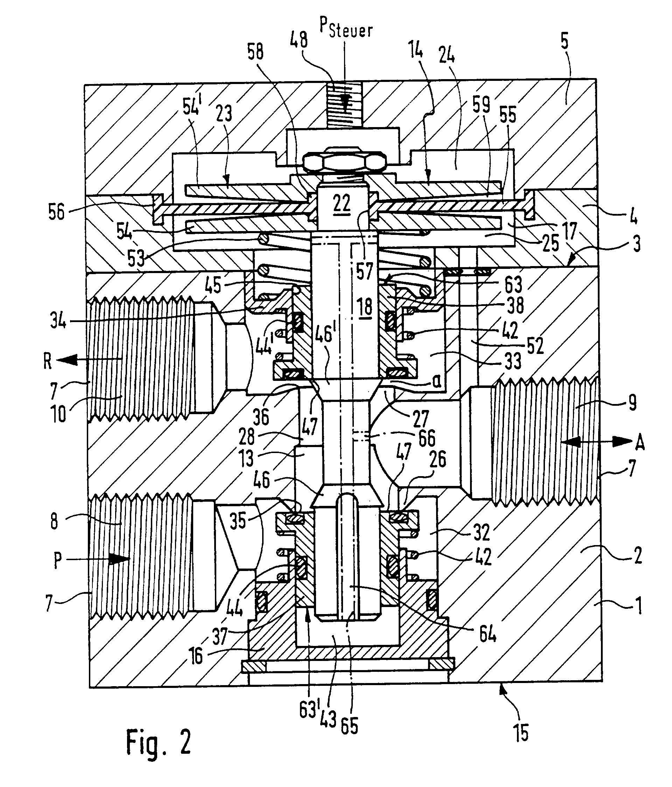

Im Bereich der axialen Stirnfläche 3 öffnet sich der Aufnahmeraum 13 in einen in der Zwischenplatte 4 und/oder der Abschlußplatte 5 ausgebildeten Arbeitsraum 17. An der entgegengesetzten, in Fig. 2 nach unten weisenden Stirnfläche 15 des Grundkörpers 2, ist der Aufnahmeraum 13 durch einen in ihn eingesetzten Verschlußdeckel 16 dicht verschlossen.

Die Stelleinrichtung 14 umfaßt ein stangenförmiges Stellglied 18, das sich koaxial in dem Aufnahmeraum 13 erstreckt und mit einem Endabschnitt 22 in den Arbeitsraum 17 hineinragt. An dem Endabschnitt 22 ist eine Beaufschlagungseinrichtung 23 angeordnet, die den Arbeitsraum 17 axial und unter Abdichtung in eine der Abschlußplatte 5 zugeordnete Steuerkammer 24 und eine dem Grundkörper 2 zugeordnete Gegendruckkammer 25 unterteilt. Die Beaufschlagungseinrichtung 23 ist gemeinsam mit dem Stellglied 18 in Längsrichtung des Arbeitsraumes 17 bewegbar. Die entsprechende Bewegung sei als Regelbewegung bezeichnet. Der Aufnahmeraum 13 steht mit der Gegendruckkammer 25 in unmittelbarer Verbindung.

Der Sekundärdruck-Anschluß 9 steht über eine in dem Aufnahmeraum 13 definierte erste überströmöffnung 26 mit dem Primärdruck-Anschluß 8 in Verbindung. Des weiteren steht er über eine mit axialem Abstand zu der ersten Überströmöffnung 26 angeordnete und ebenfalls in dem Aufnahmeraum 13 befindliche zweite überströmöffnung 27 mit dem Entlüftungsanschluß 10 in Verbindung. über die Regelbewegung des Stellgliedes 18 lassen sich die von den überströmöffnungen 26, 27 zur Verfügung gestellten Überströmquerschnitte variabel stufenlos einstellen.

Der Sekundärdruck-Anschluß 9 mündet in dem axial zwischen den beiden überströmöffnungen 26, 27 angeordneten Zwischenabschnitt 28 in den Aufnahmeraum 13 . Der Primärdruck-Anschluß 8 mündet in den sich in Richtung des Verschlußdeckels 16 axial an die erste überströmöffnung 26 anschließenden ersten Endabschnitt 32 des Aufnahme raumes 13. Der Entlüftungsanschluß 10 mündet in den zweiten Endabschnitt 33 des Aufnahme raumes 13, der sich auf der dem ersten Endabschnitt 32 entgegengesetzten Axialseite des Zwischenabschnittes 28 befindet. Der erste Endabschnitt 32 wird durch den Verschlußdeckel 16 begrenzt. Der zweite Endabschnitt 33 ist durch eine Trennwand 34 von der sich anschließenden Gegendruckkammer 25 abgeschottet.

Jede Überströmöffnung 26, 27 ist von einem gehäusefesten ringförmigen Ventilsitz 35, 36 umgeben, der axial von dem Zwischenabschnitt 28 wegweist. In dem ersten Endabschnitt 32 befindet sich ein erstes Verschlußglied 37, in dem zweiten Endabschnitt 33 ist ein zweites Verschlußglied 38 angeordnet. Beide Verschlußglieder 37, 38 sind in dem zugeordneten Endabschnitt 32, 33 axial beweglich, die mögliche Bewegungsrichtung fällt also mit der Richtung der Regelbewegung des Stellgliedes 18 zusammen.

Jedes Verschlußglied 37, 38 kann eine Schließstellung einnehmen, in der es am zugeordneten Ventilsitz 35, 36 dicht anliegt und dadurch die zugeordnete überströmöffnung 26, 27 vollständig verschließt. In diesem Falle ist die Verbindung des Sekundärdruck-Anschlusses 9 zum zugeordneten Primärdruck-Anschluß 8 bzw. Entlüftungsanschluß 10 unterbrochen. Ferner kann jedes Verschlußglied 37, 38 verschiedene Offenstellungen einnehmen, in denen es um einen mehr oder weniger großen Betrag vom zugeordneten Ventilsitz 35, 36 abgehoben ist, so daß es dem Öffnungsgrad entsprechend unterschiedliche Überströmquerschnitte für das Druckmittel zur Verfügung stellen kann.

Jedes Verschlußglied 37, 38 ist von einer Federanordnung 42 im Schließsinne beaufschlagt. Diese ist beim Ausführungsbeispiel von einer Schraubendruckfeder gebildet. Sie stützt sich einerseits am jeweiligen Verschlußglied 37, 38 und andererseits am zugeordneten Verschlußdeckel 16 bzw. an der Trennwand 34 ab. Fehlt eine Gegenkraft, werden die Verschlußglieder 37, 38 durch die Federkräfte der Federanordnungen 42 in den Schließstellungen gehalten.

Das erste Verschlußglied 37 ist in einer Ausnehmung 43 des Verschlußdeckels 16 axial beweglich geführt. Im Bereich des Führungskontaktes erfolgt z. B. durch einen am beweglichen Verschlußglied 37 angeordneten Dichtring 44 eine Abdichtung, die verhindert, daß am Primärdruck-Anschluß 8 anstehendes Druckmittel in die Ausnehmung 43 gelangt.

In entsprechender Weise ist das zweite Verschlußglied 38 in einer die Trennwand 34 durchsetzenden Durchbrechung 45 axial verschiebbar geführt. Ein Dichtring 44' verhindert eine Druckmittelströmung zwischen der Gegendruckkammer 25 und dem zweiten Endabschnitt 33 des Aufnahmeraumes 13.

In bevorzugter Ausgestaltung werden die beiden Verschlußglieder 37, 38 von dem Stellglied 18 wie abgebildet koaxial durchsetzt. Dabei sind ein jeweiliges Verschlußglied 37, 38 und das Stellglied 18 relativ zueinander axial beweglich. Jedem Verschlußglied 37, 38 ist allerdings ein als Betätigungspartie 46, 46' bezeichneter Bewegungsanschlag zugeordnet, der fest und insbesondere einstückig mit dem Stellglied 18 verbunden ist. Die Anordnung ist so getroffen, daß die Betätigungspartien 46, 46' lediglich entgegen der Schließkraft der Federanordnungen 42 auf das zugeordnete Verschlußglied 37, 38 einwirken können. Beim Ausführungsbeispiel befinden sie sich in dem Längenabschnitt des Stellgliedes 18, der sich axial zwischen den beiden Verschlußgliedern 37, 38 erstreckt. Sie sind hier in Gestalt insbesondere ringsumlaufender Radialvorsprünge ausgebildet, die an der zugewandten Stirnfläche 47 des betreffenden Verschlußgliedes 37, 38 anliegen können. Ihr axialer Abstand voneinander ist so gewählt, daß sie an den beiden Stirnflächen 47 gerade anliegen, wenn sich beide Verschlußglieder 37, 38 in der Schließstellung befinden.

Diese Stellung des Stellgliedes 18 bzw. der gesamten Stelleinrichtung 14 sei als Neutralstellung bezeichnet. In ihr ist der Sekundärdruck-Anschluß 9 sowohl vom Primärdruck-Anschluß 8 als auch vom Entlüftungsanschluß 10 dicht abgetrennt.

Im Betrieb des Druckregelventils steht am Primärdruck-Anschluß 8 unter einem Primärdruck stehendes pneumatisches Druckmittel an. Die betreffende Öffnung 7 ist hierzu mit einer geeigneten Druckmittelquelle verbunden. Der Sekundärdruck-Anschluß 9, der den Arbeitsanschluß darstellt, steht mit einem Verbraucher in Verbindung, der mit einer bestimmten Menge des Druckmittels zu versorgen ist, das unter einem möglichst konstanten Sekundärdruck steht. Dieser Sekundärdruck kann dem Primärdruck entsprechen, wird allerdings regelmäßig geringer sein. Die Höhe des Sekundärdruckes wird durch die Stelleinrichtung 14 eingestellt.

Hat der Sekundärdruck das gewünschte Niveau, verbleibt die Stelleinrichtung 14 in der erläuterten Neutralstellung. Fällt der Sekundärdruck unter den gewünschten Sollwert, so verlagert sich das Stellglied 18 in Richtung der unteren Stirnfläche 15, wobei ihre erste Betätigungspartie 46 das erste Verschlußglied 37 vom zugeordneten Ventilsitz abhebt. Dadurch strömt Druckmittel aus dem Primärdruck-Anschluß 8 zum Sekundärdruck-Anschluß 9, was dort eine Druckerhöhung bewirkt. Die betreffende Regelstellung der Stelleinrichtung 14 sei als Speisestellung bezeichnet. Es sind unterschiedliche Speisestellungen möglich, die sich im Betrag des jeweils zur Verfügung gestellten Überströmquerschnittes unterscheiden. Bei allen Speisestellungen bleibt die zweite Überströmöffnung 27 verschlossen. Infolge der Relativbewegung zwischen dem bewegten Stellglied 18 und dem feststehenden zweiten Verschlußglied 38 hat sich dabei die Betätigungspartie 46' um einen mehr oder weniger großen Betrag von der Stirnfläche 47 des zugeordneten zweiten Verschlußgliedes 38 entfernt.

Übersteigt der Sekundärdruck den Sollwert, so verlagert sich das Stellglied 18 in Gegenrichtung, das heißt in Fig. 2 nach oben. Sobald die Betätigungspartie 46' das zweite Verschlußglied 38 erreicht hat, wird dieses vom ersten Ventilsitz 36 abgehoben, wobei zum Zeitpunkt des Abhebens die erste überströmöffnung 26 bereits wieder geschlossen ist. Nun kann Druckmittel aus dem Sekundärdruck-Anschluß 9 über den Entlüftungsanschluß 10 ausströmen. Die betreffende Regelstellung sei als Entlüftungsstellung bezeichnet. Auch hier sind, je nach Größe des zur Verfügung stehenden Überströmquerschnittes an der zweiten überströmöffnung 27, verschiedene Entlüftungsstellungen möglich.

Die geschilderte Regelbewegung der Stelleinrichtung 14 wird von einem Steuerdruck P_{STEUER} beeinflußt, mit dem die Steuerkammer 24 beaufschlagt wird. Er wird beispielsgemäß über einen an der stirnseitigen Abschlußfläche der Abschlußplatte 5 ausmündenden Steuerkanal 48 zugeführt. Der Steuerdruck wirkt auf die mit dem Stellglied 18 verbundene Beaufschlagungseinrichtung 23, so daß das Stellglied 18 in Richtung der Speisestellung beaufschlagt wird. Dem Steuerdruck wirkt der momentan herrschende Sekundärdruck entgegen, der in der Gegendruckkammer 25 anliegt. Zu diesem Zweck ist die Gegendruckkammer 25 über einen im Ventilgehäuse 1 ausgebildeten Verbindungskanal 52 an den Sekundärdruck-Anschluß 9 angeschlossen.

Auf diese Weise wirkt der Sekundärdruck über die Beaufschlagungseinrichtung 23 in Richtung der Entlüftungsstellung auf das Stellglied 18 ein. Die dabei der Steuerdruckkraft entgegenwirkende Gegenkraft wird allerdings noch durch eine mechanische Federeinrichtung 53 unterstützt, die das Stellglied 18 ständig in Richtung der Entlüftungsstellungen beaufschlagt. In bevorzugter Ausführung befindet sich diese Federeinrichtung 53 wie abgebildet in der Gegendruckkammer. Sie ist vorliegend von einer Schraubendruckfeder gebildet, die sich einerseits an der von der Trennwand 34 gebildeten gehäusefesten Wandpartie der Gegendruckkammer 25 und andererseits an der nach Art eines Radialvorsprunges von dem Stellglied 18 wegragenden Beaufschlagungseinrichtung 23 abstützt.

Der variable Steuerdruck P_{STEUER} wird zweckmäßigerweise von einer nicht dargestellten Vorsteuer-Ventileinrichtung bereitgestellt. Sein Wert hängt ab vom Istwert des Sekundärdruckes, der über einen nicht dargestellten Drucksensor erfaßt werden kann, in Abhängigkeit von dessen Höhe die Vorsteuer-Ventileinrichtung betätigt wird. Der Steuerdruck kann beispielsweise über zwei durch Pulsdauermodulation betätigte Schaltventile bereitgestellt werden oder auf sonstige Weise.

Die Federeinrichtung 53 sorgt dafür, daß die Stelleinrichtung 14 bei druckloser Steuerkammer 24 eine Grundstellung einnimmt, wie sie in Fig. 2 beispielhaft angedeutet ist. Diese Grundstellung ist eine Entlüftungsstellung, wie sie oben bereits erwähnt wurde. Besagte Grundstellung nimmt die Stelleinrichtung 14 selbsttätig bzw. automatisch ein, wenn der Steuerdruck gleich Null ist, das heißt dem herrschenden Umgebungsdruck entspricht.

Auf diese Weise ist es möglich, durch einfaches Entlüften der Steuerkammer 24 eine vollständige Entlüftung des Sekundärdruck-Anschlusses 9 über den Entlüftungsanschluß 10 zu bewirken. Auf diese Weise wird verhindert, daß an dem Sekundärdruck-Anschluß 9 ein für nachfolgende Maßnahmen unerwünschter Restdruck ansteht.

Ersichtlich ist beim Ausführungsbeispiel die Abstimmung derart getroffen, daß der in der Grundstellung zwischen dem Sekundärdruck-Anschluß 9 und dem Entlüftungsanschluß 10 zur Verfügung gestellte überströmquerschnitt a geringer ist als der bei maximaler Auslenkung des zugeordneten zweiten Verschlußgliedes 38 mögliche maximale Überströmquerschnitt. Die minimale Entlüftungsstellung reicht bereits aus, um den gewünschten Effekt zu erzielen. Vorteilhafterweise ermöglicht dies die Verwendung einer verhältnismäßig schwachen Federeinrichtung 53, so daß kein übermäßig erhöhter Steuerdruck P_{STEUER} benötigt wird, um das Druckregelventil zu betreiben.

Im völlig drucklosen Zustand des Druckregelventils wird die Stelleinrichtung 14 zweckmäßigerweise auf Grund eines mechanischen Kräftegleichgewichts zwischen der erwähnten Federeinrichtung 53 und der auf das dem Entlüftungsanschluß 10 zugeordnete Verschlußglied 38 einwirkenden Federanordnung 42 in der Grundstellung fixiert.

Die beispielsgemäße Beaufschlagungseinrichtung 23 umfaßt zwei axial gestaffelt angeordnete Beaufschlagungsscheiben 54, 54', die koaxial zu dem Stellglied 18 angeordnet und daran beispielsweise durch einen Schraubverbindung festgelegt sind. Ihr Außendurchmesser ist geringer als der Innendurchmesser des Arbeitsraumes 17. Ferner umfaßt die Beaufschlagungseinrichtung 23 eine aus flexiblem, elastischem Material bestehende, luftundurchlässige Membran 55, über die das Stellglied 18 axial beweglich am Ventilgehäuse 1 aufgehängt ist. Bevorzugt besteht sie aus Material mit gummielastischen Eigenschaften. Sie bewirkt eine fluiddichte Abtrennung zwischen der Steuerkammer 24 und der Gegendruckkammer 25.

Die in Fig. 2 gezeigte Membran 55 ist mit ihrem äußeren Rand 56 ringsum gehäusefest fixiert. Bevorzugt ist sie zwischen der Zwischenplatte 4 und der Abschlußplatte 5 fest eingespannt.

Die Membran 55 verfügt des weiteren über eine zentrale Durchbrechung 57, mit der sie auf den Endabschnitt 22 des Stellgliedes 18 aufgesteckt ist. An Ort und Stelle gehalten wird sie dort durch die beiden Beaufschlagungsscheiben 54, 54', die den die Durchbrechung 57 umgebenden Rand 58 zwischen sich einspannen.

Zumindest die radial außen liegenden Bereiche der Membran 55 bilden einen beweglichen Wandabschnitt der Steuerkammer 24 und der Gegendruckkammer 25. Er wird in gleicher Weise wie auch die Beaufschlagungsscheiben 54, 54' von dem in den beiden Kammern 24, 25 herrschenden Druck beaufschlagt.

Damit sich die Membran 55 bei den Regelbewegungen gut verformen kann, erweitert sich der sie zwischen den beiden Beaufschlagungsscheiben 54, 54' aufnehmende Ringspalt 59 nach radial außen hin.

Die dem zweiten Ventilsitz 36 entgegengesetzte axiale Stirnfläche 63 des zweiten Verschlußgliedes 38 wird von dem in der Gegendruckkammer 25 befindlichen Druckmittel beaufschlagt. Sie bildet daher einen beweglichen Wandabschnitt der Gegendruckkammer 25. Um die dabei auftretenden Druckkräfte zu kompensieren, ist die dem zugeordneten Ventilsitz 35 des anderen ersten Verschlußgliedes 37 entgegengesetzte Stirnfläche 63' beim Ausführungsbeispiel den gleichen Druckverhältnissen ausgesetzt. Zu diesem Zweck ist ein Druckkraft-Ausgleichskanal 64 vorgesehen, der die Ausnehmung 43 ständig mit dem Sekundärdruck-Anschluß 9 verbindet. Dieser Kanal ist vorliegend von einer Längsnut gebildet, die am Außenumfang desjenigen Abschnittes des Stellgliedes 18 ausgenommen ist, auf welchem das erste Verschlußglied 37 längsbeweglich sitzt. Die beiden Stirnflächen 63, 63' sind gleich groß.

Der Druckkraft-Ausgleichskanal 64 könnte auch im Ventilgehäuse verlaufen oder im Innern des Stellgliedes 18. Auch der Verbindungskanal 52 könnte im Innern des Stellgliedes 18 ausgebildet sein. Denkbar wäre beispielsweise eine Kanalführung wie in Fig. 2 strichpunktiert angedeutet, wobei ein im Stellglied 18 längs verlaufender Kanal 65 einenends zu der Ausnehmung 43 und andernends zu der Gegendruckkammer 25 ausmündet und ein von diesem Kanal 65 abgehender Zweigkanal 66 zu dem Zwischenabschnitt 28 hin offen ist.

Das Druckregelventil besitzt eine gute Regelqualität, da die beiden Verschlußglieder 37, 38 mechanisch voneinander entkoppelt sind, so daß im Falle eines Schwingens des einen Verschlußgliedes die Funktion des anderen unbeeinträchtigt bleibt. Da eine Druckkompensation vorliegt, genügt es, die Federanordnungen 42 insgesamt nur so stark auszubilden, daß sie die eventuell auftretenden Gewichtskräfte sowie die Reibungskräfte überwinden. Die beim Ausführungsbeispiel zwischen den Dichtringen 44, 44' und der zugeordneten gehäusefesten Kontaktfläche auftretende Reibung wirkt sich funktionsmäßig nur in einer Richtung aus, so daß die Hysterese des Ventils nicht beeinflußt wird.

Das Ventil arbeitet insgesamt sehr stabil, was sich besonders in Regelkreisen auswirkt, wo man auf Basis dieses Konzepts höhere Genauigkeiten und eine deutlich geringere Neigung zum Schwingen feststellen kann.

Der Druckkraftausgleich wird auch mit dadurch verwirklicht, daß die beiden Ventilsitze 35, 36 gleich groß ausgebildet sind. Durch die Aufhängung an einer Membran 55 ist eine reibungsfreie Kraftübertragung möglich. Durch die Federunterstützung der Federeinrichtung 53 läßt sich erreichen, daß am Sekundärdruck-Anschluß 9 ein druckloser Zustand vorliegt.

## Patentansprüche

1. Druckregelventil, mit einem Primärdruck-Anschluß (8) zur Druckmittelzufuhr, einem druckgeregelten Sekundärdruck-Anschluß (9) zur Verbindung mit einem Verbraucher, und einem Entlüftungsanschluß (10), ferner mit einer Stelleinrichtung (14), die mittels eines in einer Steuerkammer (24) herrschenden veränderlichen Steuerdruckes in verschiedenen Regelstellungen positionierbar ist, unter denen sich eine Neutralstellung, wenigstens eine Speisestellung und wenigstens eine Entlüftungsstellung befindet, wobei der Sekundärdruck-Anschluß (9) in der Neutralstellung sowohl vom Primärdruck-Anschluß (8) als auch vom Entlüftungsanschluß (10) abgetrennt ist, während er in den möglichen Speise- und Entlüftungsstellungen jeweils entweder mit dem Primärdruck-Anschluß (8) oder dem Entlüftungsanschluß (10) verbunden und gleichzeitig vom jeweils anderen Anschluß (10, 8) abgetrennt ist, und wobei die Stelleinrichtung (14) durch eine der Wirkungsrichtung des Steuerdruckes entgegenwirkende mechanische Federeinrichtung (53) derart beaufschlagt ist, daß sie bei in der Steuerkammer (24) herrschendem Umgebungsdruck selbsttätig eine Grundstellung einnimmt, die einer Entlüftungsstellung entspricht, gekennzeichnet durch ein Ventilgehäuse in dem sich zwei den Sekundärdruck-Anschluß (9) zum einen mit dem Primärdruck-Anschluß (8) und zum andern mit dem Entlüftungsanschluß (10) verbindende Überströmöffnungen (26, 27) befinden, die jeweils von einem gehäusefesten Ventilsitz (35, 36) umgeben sind, wobei die Stelleinrichtung (14) zwei unabhängig voneinander bewegbare, jeweils einem der Ventilsitze (35, 36) zugeordnete und federnd in Richtung einer die zugeordnete Überströmöffnung (26, 27) verschließenden Schließstellung vorgespannte Verschlußglieder (37, 38) sowie ein zur Betätigung der Verschlußglieder (37, 38) dienendes, unter Vermittlung des Steuerdruckes linear bewegbares Stellglied (18) aufweist.

2. Druckregelventil nach Anspruch 1, dadurch gekennzeichnet, daß der zwischen dem Sekundärdruck-Anschluß (9) und dem Entlüftungsanschluß (10) zur Verfügung gestellte Überströmquerschnitt (a) für das Druckmittel in der Grundstellung geringer ist als in der im Betrieb maximalen möglichen Entlüftungsstellung.

3. Druckregelventil nach Anspruch 1 oder 2, dadurch gekennzeichnet, daß die Stelleinrichtung (14) bei druckloser Steuerkammer (24) auf Grund eines mechanischen Kräftegleichgewichts zwischen der Federeinrichtung (53) und wenigstens einer weiteren, auf die Stelleinrichtung (14) einwirkenden Federanordnung (42) in der Grundstellung gehalten wird.

4. Druckregelventil nach einem der Ansprüche 1 bis 3, dadurch gekennzeichnet, daß die Verschlußglieder (37, 38) und das Stellglied (18) in Verstellrichtung (19) des Stellgliedes (18) relativ zueinander beweglich sind, wobei jedem Verschlußglied (37, 38) eine an dem Stellglied (18) vorgesehene Betätigungspartie (46, 46') zugeordnet ist, die in Öffnungsrichtung auf das zugeordnete Verschlußglied (37, 38) einwirken kann, wenn sich das Stellglied (18) ausgehend von der Neutralstellung in Richtung der Entlüftungsstellung oder der Speisestellung verlagert.

5. Druckregelventil nach Anspruch 4, dadurch gekennzeichnet, daß die Verschlußglieder (37, 38) von dem Stellglied (18) durchsetzt und axial verschieblich auf diesem angeordnet sind.

6. Druckregelventil nach Anspruch 5, dadurch gekennzeichnet, daß die Betätigungspartien (46, 46') des Stellgliedes (18) von zwei insbesondere kragenartig ausgebildeten Radialvorsprüngen gebildet sind, die axial zwischen den beiden Verschlußgliedern (37, 38) angeordnet sind und je nach Bewegungsrichtung des Stellgliedes (18) das eine oder andere Verschlußglied (37, 38) vom zugeordneten Ventilsitz (35, 36) abheben.

7. Druckregelventil nach einem der Ansprüche 1 bis 6, dadurch gekennzeichnet, daß das insbesondere stangenförmig ausgebildete Stellglied (18) über eine flexible Membran (53) beweglich am Ventilgehäuse (1) aufgehängt ist, die einen beweglichen Wandabschnitt der Steuerkammer (24) bildet.

8. Druckregelventil nach Anspruch 7, dadurch gekennzeichnet, daß auf der der Steuerkammer (24) entgegengesetzten Seite der Membran (55) eine ständig mit dem Sekundärdruck-Anschluß (9) kommunizierende Gegendruckkammer (25) vorgesehen ist.

9. Druckregelventil nach Anspruch 8, dadurch gekennzeichnet, daß die zur Fixierung der Grundstellung dienende Federeinrichtung (53) in der Gegendruckkammer (25) angeordnet ist.

10. Druckregelventil nach Anspruch 9, dadurch gekennzeichnet, daß die Federeinrichtung (53) das Stellglied (18) koaxial umschließt, wobei sie sich einerseits an einer gehäusefesten Wandpartie (34) der Gegendruckkammer (25) und andererseits an einem am Stellglied (18) vorgesehenen Radialvorsprung (54) abstützt.

11. Druckregelventil nach einem der Ansprüche 8 bis 10, dadurch gekennzeichnet, daß eine dem zugeordneten Ventilsitz (36) axial abgewandte Stirnfläche (63) des einen Verschlußgliedes (38) einen beweglichen Wandabschnitt der Gegendruckkammer (25) bildet, wobei das andere Verschlußglied (37) eine von seinem zugeordneten Ventilsitz (35) axial abgewandte Stirnfläche (63') gleicher Größe besitzt, die über einen mit dem Sekundärdruck-Anschluß (9) kommunizierenden Druckkraft-Ausgleichskanal (64) ständig vom Sekundärdruck beaufschlagt wird.

## Claims

1. Pressure-control valve with a primary pressure connection (8) for the supply of pressure medium, a pressure-controlled secondary pressure connection (9) for connecting to an actuator, and a venting connection (10), also with a control device (14) which can be positioned in various control positions by means of a variable control pressure prevailing in a control chamber (24), said control positions including a neutral position, one or more feed positions and one or more venting positions, wherein the secondary pressure connection (9) is separated from both the primary pressure connection (8) and also the venting connection (10), while in the possible feed and venting positions it is connected to either the primary pressure connection (8) or the venting connection (10) and simultaneously separated from the respective other position (10, 8), and wherein the control device (14) is acted upon by a mechanical spring device (53) counteracting the direction of action of the control pressure in such a way that, at the ambient pressure prevailing in the control chamber (24), it automatically assumes a normal position corresponding to a venting position, characterized by a valve housing in which are located two overflow ports (26, 27), connecting the secondary pressure connection (9) on the one hand to the primary pressure connection (8) and on the other hand to the venting connection (10), each surrounded by a valve seat (35, 36) fixed to the housing, wherein the control device (14) has two independently movable prestressed closing members (37, 38), each assigned to one of the valve seats (35, 36) and sprung in the direction of a closing position which shuts off the assigned overflow port (26, 27), together with a linearly movable control element (18) serving to operate the closing members (37, 38) by means of the control pressure.

2. Pressure-control valve according to claim 1, characterized in that the overflow cross-section (a) for the pressure medium provided between the secondary pressure connection (9) and the venting connection (10) is smaller in the normal position than the maximum venting position possible in operation.

3. Pressure-control valve according to claim 1 or 2, characterized in that, with the control chamber (24) unpressurized, the control device (14) is held in the normal position owing to a mechanical equilibrium of forces between the spring device (53) and one or more further spring assemblies (42) acting on the control device (14).

4. Pressure-control valve according to any of claims 1 to 3, characterized in that the closing members (37, 38) and the control element (18) are movable relative to one another in the operating direction (19) of the control element (18), wherein each closing member (37, 38) is assigned an actuating section (46, 46') provided on the control element (18) and which is able to act on the assigned closing member (37, 38) in the opening direction, when the control element (18) moves from the neutral position in the direction of the venting position or the feed position.

5. Pressure-control valve according to claim 4, characterized in that the closing members (37, 38) are penetrated by the control element (18) on which they are mounted so as to be axially movable.

6. Pressure-control valve according to claim 5, characterized in that the actuating sections (46, 46') of the control element (18) are formed by two radial projections, in particular collar-like, which are mounted axially between the two closing members (37, 38), and lift one or the other closing member (37, 38) from the assigned valve seat (35, 36), depending on the direction of movement of the control element (18).

7. Pressure-control valve according to any of claims 1 to 6, characterized in that the control element (18), which is in particular rod-shaped, is suspended movably from the valve housing (1) via a flexible membrane (53), which forms a movable wall section of the control chamber (24).

8. Pressure-control valve according to claim 7, characterized in that a back-pressure chamber (25) in constant communication with the secondary pressure connection (9) is provided on the side of the membrane (55) opposite the control chamber (24).

9. Pressure-control valve according to claim 8, characterized in that the spring device (53) used to fix the normal position is located in the back-pressure chamber (25).

10. Pressure-control valve according to claim 9, characterized in that the spring device (53) coaxially encompasses the control element (18), resting at one end on a wall section (34) of the back-pressure chamber (25) fixed to the housing, and at the other end on a radial projection (54) provided on the control element (18).

11. Pressure-control valve according to any of claims 8 to 10, characterized in that an end face (63) of one closing member (38) facing axially away from the assigned valve seat (36) forms a movable wall section of the back-pressure chamber (25), while the other closing member (37) has an end face (63') of identical size which faces axially away from its assigned valve seat (35) and is constantly under secondary pressure from a pressure force compensation passage (64) communicating with the secondary pressure connection (9).

## Revendications

1. Soupape de régulation de pression comportant un raccordement de pression primaire (8) pour l'arrivée d'un fluide sous pression, un raccordement de pression secondaire (9) régulé en pression pour la liaison avec un récepteur, ainsi qu'un raccordement de purge d'air (10), comportant en outre un dispositif de réglage (14) qui peut être positionné, au moyen d'une pression de commande variable régnant dans une chambre de commande (24), dans différentes positions de régulation parmi lesquelles se trouve une position neutre, au moins une position d'alimentation et au moins une position de purge d'air, le raccordement de pression secondaire (9) en position neutre étant séparé du raccordement de pression primaire (8) comme du raccordement de purge d'air (10), tandis que dans les positions possibles d'alimentation et de purge d'air, il est relié soit au raccordement de pression primaire (8), soit au raccordement de purge d'air (10), et est séparé en même temps de l'autre raccordement (10, 8) et le dispositif de réglage (14) étant sollicité par un dispositif mécanique à ressort (53), agissant en sens contraire au sens d'action de la pression de commande, de manière que lorsque la pression ambiante règne dans la chambre de commande (24), le dispositif de réglage prend automatiquement une position de base qui correspond à une position de purge d'air, caractérisée par un boîtier de soupape dans lequel se trouvent deux orifices de trop-plein (26, 27) qui relient d'une part le raccordement de pression secondaire (9) au raccordement de pression primaire (8) et d'autre part, au raccordement de purge d'air (10) et qui sont entourés chacun par un siège de soupape (35, 36) solidaire du boîtier, le dispositif de réglage (14) comportant deux organes de fermeture (37, 38) déplaçables indépendamment l'un de l'autre, affectés chacun à l'un des sièges de soupape (35, 36) et précontraints élastiquement dans la direction d'une position de fermeture, qui ferment l'orifice de trop-plein (26, 27) correspondant, ainsi qu'un organe de réglage (18) déplaçable linéairement par l'intermédiaire de la pression de commande, et servant à actionner les organes de fermeture (37, 38).

2. Soupape de régulation de pression selon la revendication 1, caractérisée en ce que la section de trop-plein (a) pour le fluide sous pression, disponible entre le raccordement de pression secondaire (9) et le raccordement de purge d'air (10), est inférieure en position de base à ce qu'elle est dans la position de purge d'air maximale possible pendant le fonctionnement.

3. Soupape de régulation de pression selon la régulation 1 ou 2, caractérisée en ce que dans le cas où la chambre de commande (24) est sans pression, le dispositif de réglage (14) est maintenu dans la position de base, en raison d'un équilibre mécanique des forces entre le dispositif à ressort (53) et au moins un autre agencement à ressort (42) agissant sur le dispositif de réglage (14).

4. Soupape de régulation de pression selon l'une des revendications 1 à 3, caractérisée en ce que les organes de fermeture (37, 38) et l'organe de réglage (18) sont déplaçables l'un par rapport à l'autre dans la direction de déplacement (19) de l'organe de réglage (18), à chaque organe de fermeture (37, 38) étant affectée une partie d'actionnement (46, 36') qui est prévue sur l'organe de réglage (18) et qui peut agir dans le sens d'ouverture sur l'organe de fermeture (37, 38) correspondant, lorsque, partant de la position neutre, l'organe de réglage (18) est déplacé en direction de la position de purge d'air ou de la position d'alimentation.

5. Soupape de régulation de pression selon la revendication 4, caractérisée en ce que les organes de fermeture (37, 38) sont traversés par l'organe de réglage (18) et sont disposés sur celui-ci de manière à pouvoir coulisser axialement.

6. Soupape de régulation de pression selon la revendication 5, caractérisée en ce que les parties d'actionnement (46, 46') de l'organe de réglage (18) sont formées par deux saillies radiales, conformées en particulier à la manière d'un collet, qui sont disposées axialement entre les deux organes de fermeture (37, 38) et qui, suivant le sens de déplacement de l'organe de réglage (18), soulèvent l'un ou l'autre organe de fermeture (37, 38) du siège de soupape (35, 36) correspondant.

7. Soupape de régulation de pression selon l'une des revendications 1 à 6, caractérisée en ce que l'organe de réglage (18), conformé en particulier en tige, est suspendu de manière à pouvoir se déplacer sur le boîtier de soupape (1), par une membrane flexible (55) qui forme une portion de paroi mobile de la chambre de commande (24).

8. Soupape de régulation de pression selon la revendication 7, caractérisée en ce que sur le côté de la membrane (55), opposé à la chambre de commande (24), est prévue une chambre de contre-pression (25) qui communique en permanence avec le raccordement de pression secondaire (9).

9. Soupape de régulation de pression selon la revendication 8, caractérisée en ce que le dispositif à ressort (53), qui sert à fixer la position de base, est disposé dans la chambre de contre-pression (25).

10. Soupape de régulation de pression selon la revendication 9, caractérisée en ce que le dispositif à ressort (53) enferme coaxialement l'organe de réglage (18), en prenant appui d'une part contre une partie de paroi (34) de la chambre de contre-pression (25) solidaire du boîtier et d'autre part, contre une saillie radiale (54) prévue sur l'organe de réglage (18).

11. Soupape de régulation de pression selon l'une des revendications 8 à 10, caractérisée en ce qu'une surface frontale (63), tournée axialement à l'opposé du siège de soupape (36) correspondant, d'un organe de fermeture (38), forme une portion de paroi mobile de la chambre de contre-pression (25), tandis que l'autre organe de fermeture (37) possède une surface frontale (63') de même dimension, tournée axialement à l'opposé de son siège de soupape (35) correspondant et qui est sollicitée en permanence par la pression secondaire, par l'intermédiaire d'un canal de compensation des forces de pression (64) qui communique avec le raccordement de pression secondaire (9).
